# EUROPEAN PATENT SPECIFICATION

(11) **EP 3 944 749 B1**
(45) Date of publication and mention of the grant of the patent: **15.10.2025**
(21) Application number: 21183536.8
(22) Date of filing: 02.07.2021
(51) Int. Cl.: A01D 34/14

(54) **HIGH-RESISTANCE CUTTER BAR BLADE AND RELATIVE CUTTER BAR**
SCHNEIDLEISTENMESSER MIT HOHER FESTIGKEIT UND ENTSPRECHENDE SCHNEIDLEISTE
LAME DE BARRE DE COUPE À HAUTE RÉSISTANCE ET BARRE DE COUPE CORRESPONDANTE

(30) Priority: 29.07.2020 IT 202000018457
(43) Date of publication of application: 02.02.2022
(73) Proprietor: BCS S.p.A., 20123 Milano (MI) (IT)
(72) Inventor: OMODEO VANONE, Fabrizio, 27036 MORTARA (IT)
(74) Representative: Dragotti & Associati S.R.L.

(56) References cited:
- EP-A1- 0 346 787
- DE-C1- 3 313 132
- GB-A- 1 249 749
- GB-A- 891 085
- US-A- 2 664 690
- US-A- 5 054 277

## Description

The present invention relates to a high-resistance blade for a cutter bar and the relative cutter bar.

Cutter bars are mainly agricultural equipment for cutting grass and the like and consist of a series of blades constrained to their parts.

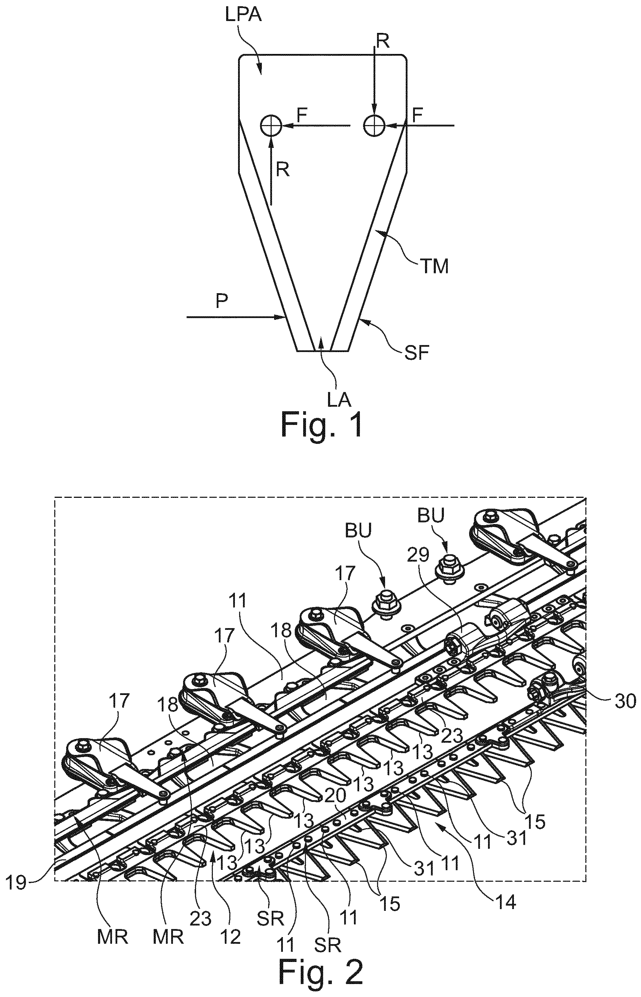

Blades for cutter bars have been known and used for a long time and generally appear as shown in figure 1. It should be noted that they have a triangular shape in a front portion LA which extends into an enlarged rear portion LPA for attachment to the structure of the cutter bar.

The form of this blade and its fixing to a strip of the cutter bar structure with two rivets are known solutions which have already been widely applied.

These blades also provide, laterally with respect to the two sides in the triangular front portion LA, two bevelled corners TM.

Each TM bevelled corner forms the cutting edge of the blade which faces outwardly and is located in the upper part. In addition, the blades can provide a peripheral serration SF on each bevelled corner with a cutting edge TM, provided towards the outside and which faces and is almost in contact with the comb of the cutter bar.

The combination of these geometric features has proved to be effective for cutting grass in general.

It can also be seen that this type of blade has two holes in the enlarged upper part for fixing on site by means of rivets.

This solution is known and widely applied, especially on blades for motor mowers and combine harvesters.

For the blades of the latter, often having an extremely considerable length, lightened blades can be used through additional holes that reduce their mass.

When functioning, the blades frequently hit stubborn obstacles, such as stones or roots.

This impact or impulsive force (indicated with the arrow P in figure 1) is usually located on the sharp side and subjects the rivets RI inserted in the respective two holes to shear stress (stress indicated with the arrows F).

This stress can lead to playing on the nailing and even shearing the rivets RI.

Nailing the blades with rivets to the steel strip is an inherently weak element.

Clearances must also be avoided in fixing the blades as the integrity of the mechanism would be rapidly jeopardized.

Blades of this type are applied to cutter bars which, as mentioned, are mainly agricultural equipment and can be of various types.

A first type of cutter bars are those with alternating motion (called sickle bars). These bars are used for mowing grass or forage or for freeing plots of land from vegetation in general. These bars are generally mechanically driven usually by an internal combustion engine. They can be constrained and actuated by a specific machine called motor mower driven on foot or with a driver on board. Alternatively, they can be coupled with an agricultural tractor that drives them with its own engine.

There are also examples of cutter bars of the type in question towed on a frame equipped with wheels. And in this case it is the same wheels that activate the cutting mechanism, during movement, through a special transmission.

The current state of the art of these cutter bars is almost always based on two elements that move in reciprocating motion with respect to each other.

The cut is obtained in two conceptually different ways:
A). by contrast as in bars with tongue or sheath teeth (sheath)
B). by the scissor or "mulching" effect

These two cutting methods have advantages and disadvantages which can be summarized as follows.

Type A) bars require a less accurate adjustment of the cutting elements, but, on the other hand, they cannot operate on grass already cut, otherwise they become flooded and less effective.

Type B) bars allows a clean and precise cut to be obtained under all conditions, including extremely fine grass and they are insensitive to grass already cut, but require particularly accurate adjustment.

In most of the known types, the reciprocal motion is entrusted to only one of the elements. This element, usually the upper one, is called blade.

The above-mentioned blade is composed of an array of thin sharp blades normally fixed with rivets to a steel strip.

These bars are therefore defined as single movement.

In these, the second element, which has no reciprocating motion, is called a comb, and is normally much more robust and with a mass somewhat higher than the movable blade.

In some of the other known types, both elements, blade and comb, move with respect to each other with a reciprocating and opposing motion. These bars are therefore defined as double movement.

One of their major advantages is the possibility of sizing them in order to achieve dynamic balancing.

This allows an almost total elimination of the vibrations induced on the machine and consequently on the operator.

In view of what is specified above, the known art can be summarized, partly repeating, which provides for the following four types:
1 - Contrast cutting (flaps), single movement,
2 - Scissor cutting ("mulching"), single movement,
3 - Contrast cutting (flaps), double movement,
4 - Scissor cutting ("mulching"), double movement.

An example of a bar according to the type indicated with 3 is that described and illustrated in US4901512 by the same applicant (Italian application MI 2002A000911 of 29.06.2002).

A further example shows the components of a double-movement cutter bar in document EP31438598B1 by the same Applicant. (The foregoing however also applies to single-movement cutter bars with obvious mechanical simplifications).

This example, of which reference should be made to the figures, shows the main elements of the above-mentioned bar.

In figure 2, for example, attached herewith (figure 11 of EP31438598B1), there is a rigid steel structure 11, called crowbar, which supports the bar. The bar is fixed by means of bolts BU to the machine from which it receives the movement. The actuation of the blade (single-movement bars) or blade and comb (double-movement bars) is effected by means of a mechanism called central control unit 16 in figure 3 attached herewith (figure 2 of EP31438598B1).

According to the type and structure of the motor mower, the control unit can be situated in a side or central position with respect to the cutter bar.

If the control unit is a side unit, the grass or forage cut can slide over the bar without encountering obstacles.

In the case of motor mowers with a central control unit as in figure 3 (figure 2 of EP31438598B1), the cut product must be directed to the sides and in order to allow the regular division of the grass, for example, there is a movable central cover which can be seen in figure 4 (figure 1 of EP31438598B1).

The lower blade or comb 12 is composed of a series of lower blades 13 fixed, for example with screws, to a lower supporting strip 19 or comb strip with the interpositioning of wear-resistant pads. Said comb 12 is set in motion by the control unit 16 through the head 29.

The upper blade 14, composed of a series of blades 15 fixed with rivets 21 to an upper supporting steel strip 20, to which said upper blades 15 are constrained, is positioned above the lower comb 12.

Said upper blade 14 is set in motion by the control unit 16 by means of the head or blade attachment 30.

Special retaining means MR ensure the fixing of the comb 12 and the blade 14 and counteract the horizontal backward thrust on the comb.

In the case of a single-movement cutter bar, the blade moves with an alternating rectilinear motion orthogonal to the advancement of the machine.

The comb, in single-movement bars, has no transverse motion and only moves forwards following the motion from the mowing machine.

In double-movement bars, both the blade and the comb move with an alternating rectilinear motion in an orthogonal direction with respect to the advancement of the machine.

The movement phase is opposite: the blade moving to the right corresponds to the comb moving to the left, and vice versa.

Reciprocal contact between blade and comb in the example illustrated is ensured by elastic devices 17 called blade pressers.

These blade pressers 17 are elastic and generally keep the elements in contact without the need for adjustment. They are hinged in supports screwed to the rear part of the bar, and their front part is fixed to the blade and moves with it. Adopting them can be advantageous, but not essential, as even simpler fixed blade pressers can be used.

As a rule, the upper blade 14 is composed of perforated steel strips 20 (or SR) on which the single cutting blades 15 are riveted.

The detail is visible in figure 5 (which shows figures 8, 9 and 10 of EP31438598B1) and in the following figure 6 only the upper blade 14 is shown.

In known solutions, the alternating force necessary for moving the blade and effecting the cut is impressed by means of a mechanical coupling. A lever-shaped element, otherwise known as a crank, integral with the control unit 16 engages with a corresponding element integral with the blade.

This second element, normally called head or attachment 29 and/or 30, creates a conjugate coupling with the crank.

It is absolutely necessary for the elements to move keeping two opposing planes of blade and comb in contact.

Due to mechanical constraints and dimensions, the force application line is not aligned with the steel strip of the blade.

An alternating bending moment is therefore created which induces the "wire" effect on the strip which, after a certain number of cycles, can cause its breakage.

The steel strip is the only element of the blade capable of offering significant flexural strength.

For the sake of simplicity, the following description refers to single-movement bars in which the reciprocating motion affects the blade only.

The above considerations and the resulting conclusions however are also valid for double-movement bars.

In order for the grass to be cut, sufficient force must be applied to the blade to set it in motion.

The force exerted must overcome the sliding friction and the resistance opposed to cutting by the plant stems.

In the case of forage, the cutting must be clean and precise.

A frayed cutting would hinder the re-growth of the grass resulting in a drop in productivity and economic damage.

In order to achieve this result, the relative speed between the cutting edge of the blade and the edge of the comb must be high.

The number of cycles per unit of time consequently ranges in most cases from 600 to 1,500 per minute.

This generates significant forces of inertia which, upon inversions of movement, create further stress to the entire driving mechanism of the blade.

The blades are also equipped with a suitable cutting edge which is subject to natural wear during functioning.

A sharpening surface must therefore be provided to be effected by hand or by means of abrasive wheels, however actuated.

Another important requirement is to prevent the plant stem from escaping from the blade during cutting. This task is currently effected by the cutting edge which is equipped with the above-mentioned peripheral serration SF on the two edges of said cutting edge.

Through this arrangement, by grinding the upper angled planes, the dressing of the peripheral serration SF is obtained at the same time.

In order to be effective, the blade must be thin and its mass restricted.

All of these expedients however are not capable of proposing a cutter bar blade and a cutter bar which are such as to eliminate all of the above-mentioned operational and functional problems.

GB 891085A relates to a blade according to the preamble of claim 1.

US 2664690A relates to a double-cutter bar lawn mower.

GB 1249749A relates to a method for manufacturing cutting blades and their conformation.

DE 3313132C1 relates to a cutter bar with double blades.

US 5054277A relates to a harvest bar with insertable elements.

The general objective of the present invention is to provide a blade for a cutter bar and a relative cutter bar which are capable of solving the above-mentioned drawbacks of the prior art in an extremely simple, economical and particularly functional way.

A further objective of the present invention is to provide a high-resistance blade for a cutter bar that is capable of withstanding the stress imposed on it during the mowing action.

Another objective of the present invention is to provide a blade which withstands bending stress and which does not damage the rivets that constrain it, having an improved and increased duration.

Last but not least, an objective of the present invention is to provide a blade and a cutter bar equipped with said blades that withstand alternating bending stress due to the operating motion of the bar.

The above-mentioned objectives are achieved by a cutter bar blade and a corresponding cutter bar produced according to independent claim 1 and the following subordinate claims.

The structural and functional characteristics of the present invention and its advantages with respect to the known art will become even more evident from the following description, referring to the attached schematic drawings, which show an embodiment example of the invention. In the drawings:
figure 1 shows a plan view of a known blade indicating the rivets RI and the stress to which it is subjected in the operating phase;
figures 2 to 6 show views and sections, also partial, of a cutter bar configured for effecting a scissor cut with double reciprocating motion of the upper and lower blades of the prior art according to EP31438598B1 of the same applicant;
figure 7 shows a schematic plan view from above of the upper part of a blade indicating all the stress to which it is subjected in the operating phase, once constrained by the four rivets RI;
figures 8 and 8a show a perspective view from below of the entire blade of figure 7 and an enlarged detail of the blade according to the circle k of figure 8;
figures 9, 9a and 9b are a plan view from above, a side view and a plan view from below of an embodiment of a blade according to the present invention;
figures 10 and 10a show a perspective view from below of the entire blade of figure 9 and an enlarged detail of the blade according to the circle h of figure 10;
figure 11 is a partial exploded perspective view of a cutter bar with blades;
figure 12 is a plan view of an upper blade of the cutter bar of figure 11 with blades;
figure 13 is an enlarged side view of a section of the lower blade of the cutter bar of figure 11 with blades;
figure 14 is a plan view from below of the upper blade of the cutter bar of figure 11;
figure 15 is an exploded perspective view of an upper blade of the cutter bar with blades of the embodiment of figure 9 according to the invention.

In the following description, for illustrating the figures, identical reference numbers are used for indicating construction elements with the same function. Furthermore, for clarity of illustration, some numerical references may not have been repeated in all the figures.

Indications such as "vertical" and "horizontal", "upper" and "lower" (in the absence of other indications) should be read with reference to the assembly (or operating) conditions and referring to the normal terminology used in current language, wherein "vertical" indicates a direction substantially parallel to that of the force of gravity vector "g" and horizontal a direction perpendicular to it. Indications such as "longitudinal" and "transverse" should be read with reference to the dimensions normally larger and smaller of the piece respectively.

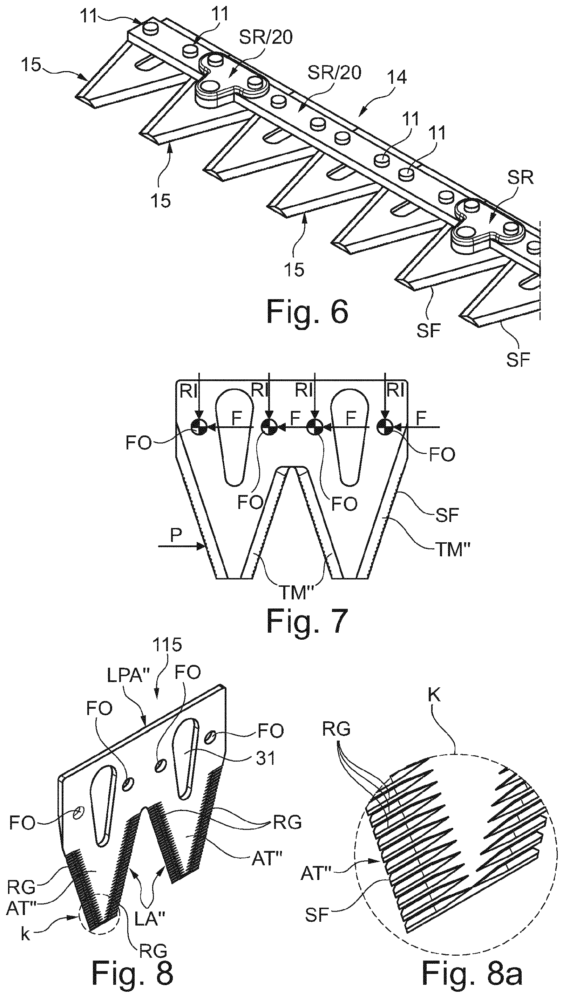

With reference to figures 7, 8 and 8a and from 9 to 10a respectively, these show two exemplary and non-limiting embodiments of blades.

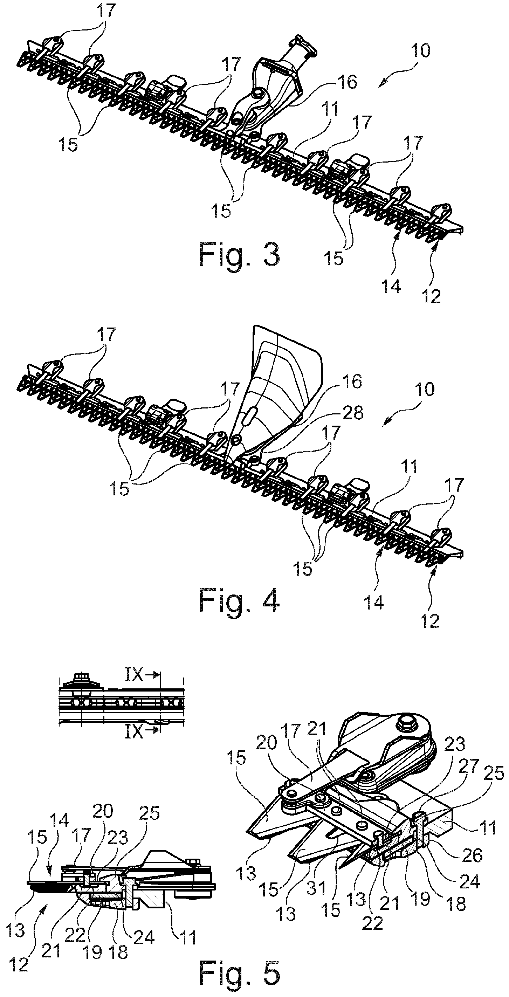

In these figures, elements identical to the known art EP31438598B1 of the same applicant shown in figures 1 to 6 will be indicated with the same reference numbers described or shown above. Parts of the description are also incorporated herein for reference.

In particular, figures 7, 8 and 8a show how a blade 115 of a first embodiment not according to the present invention provides a front portion LA" which provides at least two adjacent triangular conformations AT", to form a monolithic blade.

These two triangular conformations AT" extend from a rear portion LPA" having a longitudinal dimension at least equal to a maximum dimension of the two adjacent triangular conformations AT".

This rear portion LPA" provides at least four holes FO for the passage and fixing on site of four rivets (not shown).

It should be noted that these at least two triangular conformations AT" on a surface opposite and below that in which bevelled corners TM" are formed, provide a groove RG that extends inwardly from said peripheral serration SF to form small surface teeth (figure 8a).

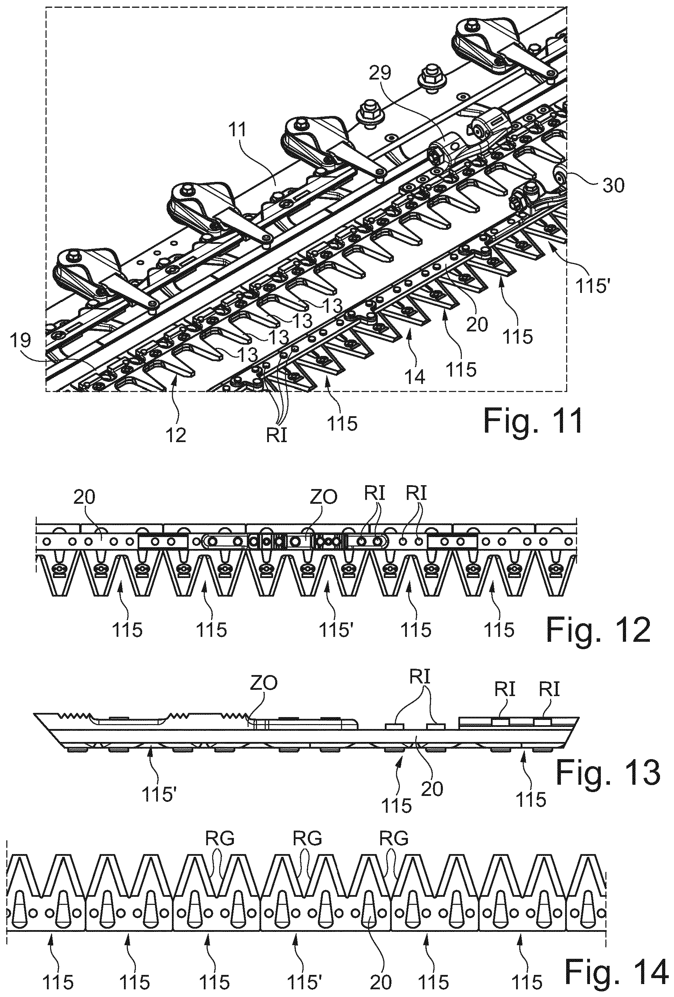

This embodiment illustrates a blade 115 which provides two triangular conformations AT", as can be seen for example in figures 11-15, however, a blade 115' can provide various triangular conformations, for example three for the central blade in figures 11 to 15.

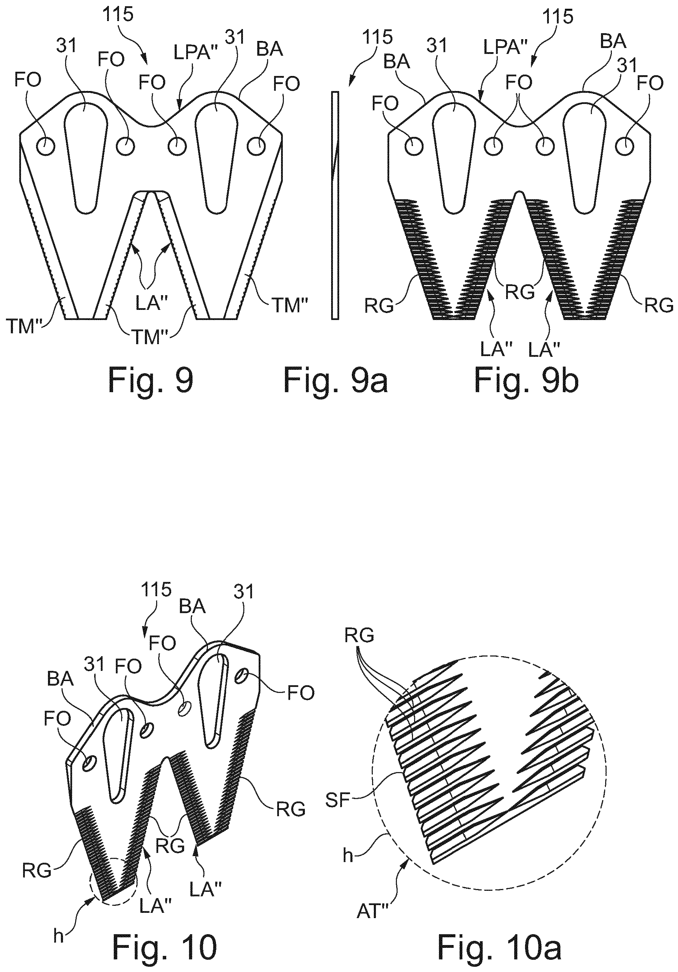

Figures 9 to 10a show the embodiment of blades 115 according to the present invention, somewhat similar to that illustrated above.

In this embodiment, in which identical elements are indicated with the same references, the rear portion LPA" in its upper free peripheral edge, or the portion having a longitudinal dimension at least equal to a maximum dimension of the two adjacent triangular conformations, has rounded edges BA for further lightening.

And, slots 31 are provided in a central area of the blade for allowing the unloading of cut plant material. The slots 31 are preferably arranged between the positioning holes FO of the rivets (not shown).

In the blades according to the invention, the bevelled corner TM" which forms the cutting edge, located in the upper part of the blade substantially in the triangular front portion LA", remains. In this case, however, four TM bevelled corners are provided, as in the previous case. It can be noted that the two outer bevelled corners TM" are longer and the two adjacent innermost bevelled corners TM" are shorter resulting in an arrangement of bevelled corners according to a w-shape.

At the same time, the invention provides that the lower underlying part of the blade has, at each bevelled corner TM", a groove RG which, during functioning, is in contact with the lower comb 12 of the cutter bar.

This groove RG forms small teeth that hold the stem of grass preventing it from sliding forward and escaping from the cutting area.

The combination of these geometric characteristics has proved to be particularly effective for cutting grass or in any case thin and flexible stems.

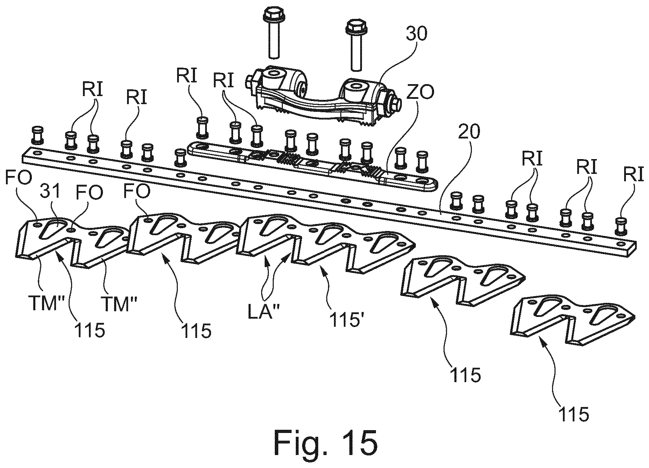

The use of monolithic blades 115, 155' with multiple bevelled corners TM" and with grooves RG underlying these bevelled corners, for example double (as in figures 7, 8 and 9) or triple (figures 14 and 15), also offers further benefits in addition to an improved cutting.

They can in fact be constrained to the steel strip SR or 20 with an increased number of rivets RI or 11.

These rivets are spaced apart and the favourable leverage effect considerably increases their shear strength due to impact.

The impulsive force P is the same for the single blade and for this monolithic blade, for example double or triple, as it is statistically unlikely for it to occur on two adjacent cutting edges that are part of the same blade.

This allows there to be a more robust monolithic blade avoiding the creation of further resistant constraints with construction and assembly difficulties.

According to the invention, a particularly effective and resistant single- or double-movement scissor-cut cutter bar is also produced, capable of cutting plant stems, such as forage.

Figures 11 to 15 show the combination obtained according to the invention by comparison with the figures of the prior patent EP31438598B1 of the same applicant, already discussed above. The same numbers are used for the same elements.

Also in this example, the bar comprises a lower blade or comb 12 consisting of a series of lower blades 13 fixed to the lower supporting strip 19 with the interpositioning of wear-resistant pads.

The upper blade 14 composed of a series of blades 115 fixed with rivets 21 to an upper supporting steel strip 20, to which said upper blades 115 are constrained, is positioned above the lower comb 12.

Blades 115 according to the invention are used in this upper blade 14, as previously described.

In particular, the upper blade 14 shown enlarged in figures 12 and 14 provides a series of monolithic blades 115 with a front portion LA" which provide two adjacent triangular conformations AT", with the exception of the central blade.

The central blade 115' of the upper blade 14, in fact, provides three adjacent triangular conformations AT" also creating a monolithic blade.

Also in this case, the blades 115, 115' with two adjacent triangular conformations AT" forming the front portion LA", provide that the lower underlying part of the blade, in correspondence with each bevelled corner TM", has a groove RG which during functioning is brought into contact with the lower comb 12 of the cutter bar.

According to the invention, therefore, the presence of monolithic blades 115, 155' of the type described above with at least two triangular conformations AT" reduces the bending of the steel strip increasing its duration.

Furthermore, this type of bar provides a clean and precise cut, avoiding a frayed cutting that would hinder the regrowth of the grass, also allowing a high relative speed between the cutting edge of the blade and the edge of the comb.

In addition, the central blade 115' provides even greater resistance than the other blades 115 as its fixing is even obtained through six rivets.

Said blade 115' is used only in the area where the driving load is applied, for example in our case the central area. The upper blade 14 is consequently composed of monolithic blades with two adjacent triangular conformations AT" in addition to the above-mentioned blade with three adjacent triangular conformations AT" in a central position where the greatest flexion takes place, increasing its resistance.

A cutter bar according to the invention however also has a further new and original feature.

In order to strengthen the upper blade 14, in fact, nothing better was found than to increase the section of the whole strip, thus inefficiently increasing the mass involved. All of this to try and reduce the effects of the bending moment on the steel strip forming part of the bar.

The present invention, on the other hand, has contemplated intervening only in the area of application of the force for a width sufficient for reducing the stress.

Figures 12, 13 and 15 show the inventive intervention applied to the cutter bar.

It can be seen from the figures that a head or blade attachment 30 which transmits the force to the upper blade 14 is not constrained directly to the steel strip 20.

A high-resistance steel component ZO, called base, is nailed above the steel strip 20 and houses the blade attachment. The base ZO also has pass-through holes for the positioning of rivets. The strip 20 is therefore provided, superimposed by the component ZO, joined together by a series of rivets or nails RI, in the example nine (figure 15). The rivets RI in this area are longer as they must block the strip, the high-resistance component ZO and monolithic blades 115, 115' together in their two or three triangular conformations AT".

This creates a layered structure with elements nailed to each other which opposes strong resistance to alternating bending.

This increase in resistance originates only in the central area subjected to most stress by the control unit.

It should be pointed out that the strip is the supporting element that transmits the driving forces and the inertia forces and which in the known art is the component subject to breakage during functioning.

In the new and inventive arrangement according to the present invention, the strip is closed and blocked between two extremely resistant "layers" of steel: the monolithic blade with three central triangular conformations 115' in the lower part and the base in the upper part.

The nailing that constrains them together allows these elements to behave monolithically.

Furthermore, the monolithic blade with three triangular conformations and the base are large enough to strengthen the entire central area subject to loads.

This is something that a series of single blades of the known art cannot do, due to the interruptions in continuity between one blade and another.

It has thus been seen that the present invention offers considerable advantages with respect to the known art.

In particular, characteristic elements are highlighted hereunder which, especially in combination, represent considerable technical progress with respect to the prior art.

A first advantage is provided, as already indicated, by the particular conformation of the blades which has been seen to include in the front portion at least two triangular conformations which extend from an enlarged rear portion.

This results in a greater transverse dimension of the blade which decreases the bending of the supporting steel strip, increasing its duration.

A second advantage lies in the increased number of constraint rivets of the monolithic blade. The increased number of rivets, their greater distance and the favourable leverage effect, in fact, increase the overall strength, especially of the nailing.

A third advantage is provided by the presence of the grooves beneath the bevelled corners.

With this arrangement, the bar carrying these blades effects a clean and precise cut, avoiding a frayed cut which would hinder the regrowth of the grass, furthermore allowing a high relative speed between the cutting edge of the blade and the edge of the comb.

With respect to a cutter bar according to the invention, it should be noted that the central provision of monolithic blades with two and three triangular conformations 115, 115' creates greater resistance to bending and stress due to the control unit.

In particular, the further presence of a base that houses the blade attachment, in high-resistance steel, nailed above the steel strip, creates a layered structure with elements nailed together with great resistance to alternating bending.

It should also be remembered that the blades 115, 115' can be particularly lightened thanks to their rear portion LPA", i.e. the portion having a longitudinal dimension at least equal to a maximum dimension of the two adjacent triangular conformations, which has rounded edges BA for further lightening.

And finally, the slots 31 are in any case provided for allowing the unloading of cut plant material, a reduction in wear and in any case for causing a lightening of the blades.

The objective mentioned in the preamble of the description has thus been achieved.

The protection scope of the present invention is defined by the enclosed claims.

## Claims

1. A blade (115,115') for agricultural equipment for cutting grass and the like comprising:
- a front portion (LA"), and
- an enlarged rear portion (LPA"), for attachment to a cutter bar structure, having a free upper peripheral rear edge, wherein the front portion (LA") comprises:
- a triangular front portion (LA") having two lateral sides;
- on each lateral side of said triangular front portion (LA") a side bevelled corner (TM") in the form of a cutting edge, located in the upper part, is provided with a peripheral serration (SF) on one edge of said cutting edge (TM), facing outwardly;
- said enlarged rear portion (LPA") comprising at least two holes (FO) for the passage and installation on site of rivets (RI);
- a triangular conformation, on a surface opposite and below that in which the bevelled corners (TM") are formed, provides grooves (RG) which extends from said peripheral serration (SF) to form small surface teeth;
**characterized in that**
- the front portion (LA") provides at least two adjacent triangular conformations (AT") extending from the enlarged rear portion (LPA") having a longitudinal dimension at least equal to a maximum dimension of the two adjacent triangular conformations,
- said rear portion (LPA") provides at least four holes (FO) for the passage and installation on site of rivets (RI);
the free upper peripheral rear edge of said rear portion (LPA") having a maximum longitudinal dimension has rounded edges (BA) for lightening.

2. The blade (115') according to claim 1, **characterized in that** it provides at least three adjacent triangular conformations (AT") which extend from a rear portion (LPA") having a longitudinal dimension at least equal to a maximum dimension of the three adjacent triangular conformations.

3. The blade (115, 115') according to one or more of the previous claims, **characterized in that** it provides, in a central area of said rear portion (LPA") and said front portion (LA"), holes or slots (31) for allowing the discharge of cut plant material.

4. The blade (115, 115') according to claim 3, **characterized in that** said holes or slots (31) are arranged between the holes (FO) for positioning the rivets (RI).

5. A cutter bar of the type that can be applied to motor-mowers or mowers comprising:
- a supporting bar (11);
- a lower blade or comb (12) which slides along the major axis with respect to said supporting bar (11) comprising a plurality of lower blades or teeth (13);
- an upper blade (14) sliding along the major axis with respect to said supporting bar (11) arranged superimposed on said lower blade and comprising a plurality of upper short blades;
- a control unit (16) configured for imparting an opposing reciprocating movement to said blades;
- blade-holder devices (17) which act on the upper surface of said upper blade (14);
wherein said upper blade (14) comprises a band or upper supporting strip (20), to which said upper short blades (115,115') are constrained by means of rivets (RI),
**characterized in that**
said upper short blades (115,115')of said plurality of upper short blades (115,115') of said upper blade (14) are blades according to one or more of the previous claims from 1 to 4.

6. The cutter bar according to claim 5, **characterized in that** a central upper short blade (115') of said upper blade (14) comprises three adjacent triangular conformations (AT") which extend from a rear portion (LPA") having a longitudinal dimension at least equal to a maximum dimension of the three adjacent triangular conformations.

7. The cutter bar according to one or more of the previous claims from 5 to 6, **characterized in that** a high-resistance steel component (ZO) or base is nailed onto said steel strip (20), which receives a blade attachment (30), wherein said component or base (ZO) also has pass-through holes for the positioning of the rivets.

## Patentansprüche

1. Lamelle (115, 115') für landwirtschaftliche Ausrüstung zum Schneiden von Gras und dergleichen, umfassend:
- einem vorderen Abschnitt (LA") und
- einen vergrößerten hinteren Abschnitt (LPA") zur Befestigung an einer Schneidbalkenstruktur, der eine freie obere hintere Umfangskante aufweist, wobei der vordere Abschnitt (LA") Folgendes umfasst:
- einen dreieckigen vorderen Abschnitt (LA") mit zwei seitlichen Seiten;
- an jeder seitlichen Seite des dreieckigen vorderen Abschnitts (LA") eine seitlich abgeschrägte Ecke (TM") in Form einer Schneidkante, die im oberen Teil angeordnet ist, mit einer Umfangsverzahnung (SF) an einer nach außen gerichteter Kante der Schneidkante (TM) bereitgestellt ist;
- wobei der vergrößerte hintere Abschnitt (LPA") mindestens zwei Löcher (FO) für den Durchgang und die Installation von Nieten (RI) vor Ort umfasst;
- eine dreieckige Formgebung auf einer Oberfläche gegenüber und unterhalb derjenigen, in der die abgeschrägten Ecken (TM") gebildet sind, Rillen (RG) bereitstellt, die sich von der Umfangsverzahnung (SF) erstrecken, um kleine Oberflächenzähne zu bilden;
**dadurch gekennzeichnet, dass**
- der vordere Abschnitt (LA") mindestens zwei benachbarte dreieckige Ausformungen (AT") bereitstellt, die sich von dem vergrößerten hinteren Abschnitt (LPA") erstrecken und eine Längsabmessung aufweisen, die mindestens gleich einer maximalen Abmessung der beiden benachbarten dreieckigen Ausformungen ist,
- der hintere Abschnitt (LPA") mindestens vier Löcher (FO) für den Durchgang und die Installation von Nieten (RI) vor Ort bereitstellt;
wobei die freie obere Umfangsrückkante des hinteren Abschnitts (LPA") eine maximale Längsabmessung aufweist, abgerundete Kanten (BA) zur Gewichtsreduzierung aufweist.

2. Lamelle (115') nach Anspruch 1, **dadurch gekennzeichnet, dass** sie mindestens drei benachbarte dreieckige Konformationen (AT") bereitstellt, die sich von einem hinteren Abschnitt (LPA") erstrecken, der eine Längsabmessung aufweist, die mindestens gleich einer maximalen Abmessung der drei benachbarten dreieckigen Konformationen ist.

3. Lamelle (115, 115') nach einem oder mehreren der vorstehenden Ansprüche, **dadurch gekennzeichnet, dass** sie in einem mittleren Bereich des hinteren Abschnitts (LPA") und des vorderen Abschnitts (LA") Löcher oder Schlitze (31) zum Ablassen von geschnittenem Pflanzenmaterial bereitstellt.

4. Lamelle (115, 115') nach Anspruch 3, **dadurch gekennzeichnet, dass** die Löcher oder Schlitze (31) zwischen den Löchern (FO) zum Positionieren der Nieten (RI) angeordnet sind.

5. Schneidbalken für Motormäher oder Rasenmäher, umfassend:
- eine Stützstange (11);
- eine untere Lamelle oder einen unteren Kamm (12), der entlang der Hauptachse in Bezug auf die Stützstange (11) gleitet und eine Vielzahl von unteren Lamellen oder Zähnen (13) umfasst;
- eine obere Lamelle (14), die entlang der Hauptachse in Bezug auf die Stützstange (11) verschiebbar ist, die über der unteren Lamelle angeordnet ist und eine Vielzahl von oberen kurzen Lamellen umfasst;
- eine Steuereinheit (16), die konfiguriert ist, um den Lamellen eine entgegengesetzte Hin- und Herbewegung zu verleihen;
- Lamellenhaltervorrichtungen (17), die auf die obere Oberfläche der oberen Lamelle (14) einwirken;
wobei die obere Lamelle (14) ein Band oder einen oberen Stützstreifen (20) umfasst, an dem die oberen kurzen Lamellen (115, 115') mittels Nieten (RI) befestigt sind, **dadurch gekennzeichnet, dass**
die oberen kurzen Lamellen (115, 115') der mehreren oberen kurzen Lamellen (115, 115') der oberen Lamelle (14) Lamellen nach einem oder mehreren der vorstehenden Ansprüche 1 bis 4 sind.

6. Schneidbalken nach Anspruch 5, **dadurch gekennzeichnet, dass** eine mittlere obere kurze Lamelle (115') der oberen Lamelle (14) drei benachbarte dreieckige Ausformungen (AT") umfasst, die sich von einem hinteren Abschnitt (LPA") erstrecken, der eine Längsabmessung aufweist, die mindestens gleich einer maximalen Abmessung der drei benachbarten dreieckigen Ausformungen ist.

7. Schneidbalken nach einem oder mehreren der vorstehenden Ansprüche 5 bis 6, **dadurch gekennzeichnet, dass** an dem Stahlband (20) eine hochfeste Stahlkomponente (ZO) oder Basis angenagelt ist, die eine Lamellenbefestigung (30) empfängt, wobei die Komponente oder Basis (ZO) auch Durchgangslöcher für die Positionierung der Nieten aufweist.

## Revendications

1. Lame (115, 115') pour équipement agricole permettant de couper l'herbe et autres végétaux comprenant :
- une partie avant (LA"), et
- une partie arrière élargie (LPA"), destinée à être fixée à une structure de barre de coupe, ayant un bord arrière périphérique supérieur libre, dans laquelle la partie avant (LA") comprend :
- une partie avant triangulaire (LA") ayant deux côtés latéraux ;
- sur chaque côté latéral de ladite partie avant triangulaire (LA"), un coin latéral biseauté (TM") en forme d'arête de coupe, situé dans la partie supérieure, est pourvu d'une dentelure périphérique (SF) sur un bord de ladite arête de coupe (TM), orientée vers l'extérieur ;
- ladite partie arrière élargie (LPA") comprenant au moins deux trous (FO) pour le passage et l'installation sur place de rivets (RI) ;
- une structure triangulaire, sur une surface opposée et inférieure à celle dans laquelle les coins biseautés (TM") sont formés, fournit des rainures (RG) qui s'étendent à partir de ladite dentelure périphérique (SF) pour former de petites dents de surface ;
**caractérisée en ce que**
- la partie avant (LA") fournit au moins deux structures triangulaires adjacentes (AT") s'étendant à partir de la partie arrière élargie (LPA") ayant une dimension longitudinale au moins égale à une dimension maximale des deux structures triangulaires adjacentes,
- ladite partie arrière (LPA") fournit au moins quatre trous (FO) pour le passage et l'installation sur place de rivets (RI) ;
le bord arrière périphérique supérieur libre de ladite partie arrière (LPA") ayant une dimension longitudinale maximale a des bords arrondis (BA) pour l'allègement.

2. Lame (115') selon la revendication 1, **caractérisée en ce qu'**elle fournit au moins trois structures triangulaires adjacentes (AT") qui s'étendent à partir d'une partie arrière (LPA") ayant une dimension longitudinale au moins égale à une dimension maximale des trois structures triangulaires adjacentes.

3. Lame (115, 115') selon l'une ou plusieurs des revendications précédentes, **caractérisée en ce qu'**elle fournit, dans une zone centrale de ladite partie arrière (LPA") et de ladite partie avant (LA"), des trous ou des fentes (31) pour permettre l'évacuation de la matière végétale coupée.

4. Lame (115, 115') selon la revendication 3, **caractérisée en ce que** lesdits trous ou fentes (31) sont agencés entre les trous (FO) pour le positionnement des rivets (RI).

5. Barre de coupe du type qui peut être appliqué à des tondeuses à moteur ou à des tondeuses, comprenant :
- une barre de support (11) ;
- une lame inférieure ou contre-peigne (12) qui coulisse le long de l'axe principal par rapport à ladite barre de support (11), comprenant une pluralité de lames inférieures ou dents (13) ;
- une lame supérieure (14) coulissant le long de l'axe principal par rapport à ladite barre de support (11), agencée de manière superposée sur ladite lame inférieure et comprenant une pluralité de lames supérieures courtes ;
- une unité de commande (16) configurée pour imprimer un mouvement alternatif opposé auxdites lames ;
- des dispositifs porte-lame (17) qui agissent sur la surface supérieure de ladite lame supérieure (14) ;
dans laquelle ladite lame supérieure (14) comprend une bande ou une barre de support supérieure (20), à laquelle lesdites lames supérieures courtes (115, 115') sont contraintes au moyen de rivets (RI),
**caractérisée en ce que**
lesdites lames supérieures courtes (115, 115') de ladite pluralité de lames supérieures courtes (115, 115') de ladite lame supérieure (14) sont des lames selon l'une ou plusieurs des revendications précédentes de 1 à 4.

6. Barre de coupe selon la revendication 5, **caractérisée en ce qu'**une lame centrale supérieure courte (115') de ladite lame supérieure (14) comprend trois structures triangulaires adjacentes (AT") qui s'étendent à partir d'une partie arrière (LPA") ayant une dimension longitudinale au moins égale à une dimension maximale des trois structures triangulaires adjacentes.

7. Barre de coupe selon l'une ou plusieurs des revendications précédentes de 5 à 6, **caractérisée en ce qu'**un composant (ZO) ou une base en acier à haute résistance est cloué sur ladite barre d'acier (20), qui reçoit une fixation de lame (30), dans laquelle ledit composant ou base (ZO) a également des trous de passage pour le positionnement des rivets.
